# EUROPÄISCHE PATENTANMELDUNG

(11) **EP 4 375 105 A1**
(43) Veröffentlichungstag der Anmeldung: **29.05.2024**
(21) Anmeldenummer: 22209428.6
(22) Anmeldetag: 24.11.2022
(51) Int. Cl.: B60K 11/08

(54) **LUFTKLAPPENVORRICHTUNG MIT FEDERNDEN LAGERZAPFEN**

(71) Anmelder: Röchling Automotive SE, 68165 Mannheim (DE)
(72) Erfinder: Schneider, Jürgen, 67550 Worms (DE)
(74) Vertreter: Ullrich & Naumann PartG mbB

(57) **Zusammenfassung**

Die vorliegende Erfindung betrifft eine Luftklappenvorrichtung für ein Kraftfahrzeug, umfassend:
- einen Rahmen mit einer Luftdurchlassöffnung und
- wenigstens eine um eine Drehachse drehbar am Rahmen gelagerte Luftklappe,
wobei die wenigstens eine Luftklappe verstellbar ist zwischen einer Schließstellung, in welcher die wenigstens eine Luftklappe eine Öffnungsfläche der Luftdurchlassöffnung stärker abdeckt, und einer Durchlassstellung, in welcher die wenigstens eine Luftklappe die Öffnungsfläche der Luftdurchlassöffnung weniger stark abdeckt, wobei die Drehachse eine zur ihr parallele axiale Richtung definiert,
wobei die wenigstens eine Luftklappe an wenigstens einem ihrer axialen Längsenden einen in axialer Richtung auskragenden Lagerzapfen aufweist, welcher zur drehbaren Lagerung der wenigstens einen Luftklappe in einer Lagerausnehmung am Rahmen um die Drehachse drehbar aufgenommen ist, wobei
der Lagerzapfen in axialer Richtung federnd mit der übrigen Luftklappe verbunden ist.

## Beschreibung

Die vorliegende Erfindung betrifft eine Luftklappenvorrichtung für ein Kraftfahrzeug. Die Luftklappenvorrichtung umfasst einen Rahmen mit einer Luftdurchlassöffnung und wenigstens eine um eine Drehachse drehbar am Rahmen gelagerte Luftklappe. Die Drehachse definiert eine zur ihr parallele axiale Richtung. Die Drehachse definiert außerdem zur ihr orthogonale radiale Richtungen.

Die wenigstens eine Luftklappe ist verstellbar zwischen einer Schließstellung, in welcher die wenigstens eine Luftklappe eine Öffnungsfläche der Luftdurchlassöffnung stärker abdeckt, und einer Durchlassstellung, in welcher die wenigstens eine Luftklappe die Öffnungsfläche der Luftdurchlassöffnung weniger stark abdeckt.

Die wenigstens eine Luftklappe weist an wenigstens einem ihrer axialen Längsenden einen in axialer Richtung auskragenden Lagerzapfen auf. Der Lagerzapfen ist zur drehbaren Lagerung der wenigstens einen Luftklappe in einer Lagerausnehmung am Rahmen um die Drehachse drehbar aufgenommen.

Eine solche Luftklappenvorrichtung ist beispielsweise aus der DE 10 2010 002 373 A1 der Anmelderin bekannt. Der Rahmen der bekannten Luftklappenvorrichtung weist als Montageerleichterung für eine bewegliche Lagerung der Luftklappen am Rahmen Lagerstellen auf, welche in axialer Richtung bezüglich der Luftklappen-Drehachse als Federzungen federnd am ansonsten starren Rahmen angeordnet und in axialer Richtung relativ zum übrigen starren Rahmen auslenkbar sind.

Nachteilig an dieser bekannten Lösung ist der durch den Federweg der Federzungen-Lagerstellen erforderliche Bewegungsraum, welcher zur Verhinderung von Kollisionen der Federzungen-Lagerstellen mit Vorrichtungen, die in der Umgebung des Rahmens angeordnet sind, als freier, unbelegter Raum zur Verfügung stehen muss.

Es ist daher Aufgabe der vorliegenden Erfindung, die eingangs genannte Luftklappenvorrichtung derart weiterzubilden, dass ohne Erhöhung des Montageaufwands zur Anordnung von Luftklappen am Rahmen der Bauraum- bzw. Bewegungsraumbedarf in unmittelbarer Umgebung des Rahmens geringer ist als bei der oben genannten Luftklappenvorrichtung.

Die vorliegende Erfindung löst diese Aufgabe an einer eingangs genannten gattungsgemäßen Luftklappenvorrichtung dadurch, dass der Lagerzapfen in axialer Richtung federnd mit der übrigen Luftklappe verbunden ist.

Durch die Verlagerung der axialen Beweglichkeit eines Bauteilabschnitts der Luftklappenvorrichtung vom Rahmen auf die Luftklappe bzw. auf eine Mehrzahl von Luftklappen kann der Rahmen der Luftklappe ohne bewegliche und aus einer Einhüllenden des Rahmens auslenkbare Rahmenabschnitte ausgebildet werden. Somit kann die unmittelbare Umgebung des Rahmens zur Anordnung weiterer Bauteile genutzt werden. Der Bewegungsraum eines Lagerbauteils, hier also des an der Luftklappe angeordneten Lagerzapfens, liegt vollständig innerhalb des von der betriebsbereiten Luftklappenvorrichtung eingehüllten Raums, sodass außerhalb des Rahmens kein weiterer Bedarf nach einem Bewegungsraum besteht.

Grundsätzlich kann daran gedacht sein, dass die Luftklappe ein Hülsenbauteil mit einer axial ausgerichteten Hülsenausnehmung und einen axial gegen Federvorspannung in die Hülsenausnehmung versenkbaren Lagerzapfen aufweist. Die zur Erzeugung der Federvorspannung notwendige Feder kann beispielsweise als Schraubenfeder in der Hülsenausnehmung aufgenommen sein und den Lagerzapfen in axialer Richtung von einem flächigen Klappenblatt der Luftklappe weg vorspannen. Nachteilig an dieser äußerst bauraumsparenden Ausgestaltung ist der vergleichsweise hohe Montageaufwand, da der Lagerzapfen und das Hülsenbauteil in der Regel gesondert voneinander hergestellt und miteinander montiert werden müssen. Die den Lagerzapfen axial vorspannende Feder kann grundsätzlich einstückig mit dem Lagerzapfen, eventuell alternativ einstückig mit dem Hülsenbauteil, ausgebildet werden, etwa wenn der Lagerzapfen bzw. das Hülsenbauteil im Spritzgussverfahren ausgebildet wird. Dennoch ist ein Mindestmaß an Montageaufwand unvermeidbar.

Eine konstruktiv einfache Luftklappe mit federnd angeordnetem Lagerzapfen, bei welcher eine Lage der Drehachse der Luftklappe relativ zu einem flächigen Klappenblatt der Luftklappe in einem weiten Bereich frei gewählt werden kann, kann dadurch erhalten werden, dass die wenigstens eine Luftklappe ein quer zur Drehachse verlaufendes Biegefederbauteil aufweist, mit welchem der Lagerzapfen verbunden ist und von welchem der Lagerzapfen in axialer Richtung auskragt.

Zur möglichst wirksamen Veränderung des durchströmbaren Querschnitts der Luftdurchlassöffnung bei Drehung der wenigstens einen Luftklappe um ihre Drehachse umfasst die wenigstens eine Luftklappe gemäß einer bevorzugten Weiterbildung der vorliegenden Erfindung ein flächiges Klappenblatt, welches sich längs der Drehachse in einer Klappenblatt-Längsrichtung erstreckt. Grundsätzlich soll nicht ausgeschlossen sein, dass die Klappenblatt-Längsrichtung mit der Drehachse einen Winkel einschließt, wobei der Winkel in der Regel nicht größer als 15° sein wird. Bevorzugt erstreckt sich die Klappenblatt-Längsachse parallel zur Drehachse der wenigstens einen Luftklappe. Das Klappenblatt erstreckt sich quer zur Drehachse in einer Klappenblatt-Breitenrichtung und erstreckt sich sowohl quer zur Drehachse als auch quer zur Klappenblatt-Breitenrichtung in einer Klappenblatt-Dickenrichtung. Das Klappenblatt weist als flächiges Klappenblatt in der Klappenblatt-Längsrichtung eine größere Abmessung auf als in der Klappenblatt-Breitenrichtung auf und weist in der Klappenblatt-Breitenrichtung eine größere Abmessung auf als in der Klappenblatt-Dickenrichtung.

Da der Lagerzapfen der Luftklappe bevorzugt an einem Längsende der Luftklappe angeordnet ist oder besonders bevorzugt sogar ein Längsende der Luftklappe bildet, ist das Biegefederbauteil bevorzugt in einem Längsendabschnitt der wenigstens einen Luftklappe angeordnet. Der Längsendabschnitt enthält das Längsende des Klappenblatts. Ausgehend von dem jeweils anderen axialen Längsende des Klappenblatts in Klappenblatt-Längsrichtung gemessen reicht der Längsendabschnitt von 85 % bis 120% der Klappenblattlänge.

Eine große konstruktive Freiheit bei der Anordnung der Drehachse relativ zum Klappenblatt erhält der Konstrukteur dadurch, dass das Biegefederbauteil an seinem einen Längsendbereich von einer Trägerstruktur auskragt, wobei der Lagerzapfen längs einer Biegefeder-Auskragrichtung mit Abstand von der Trägerstruktur mit dem Biegefederbauteil verbunden ist.

Dabei kann gemäß einer ersten möglichen konstruktiven Ausgestaltung das Klappenblatt oder eine in Klappenblatt-Längsrichtung an das Klappenblatt anschließende Fortsatzstruktur die Trägerstruktur sein. In diesem Fall ist das Klappenblatt radial zur Drehachse versetzt an der Luftklappe angeordnet.

Alternativ kann gemäß einer zweiten möglichen konstruktiven Ausgestaltung vom Klappenblatt oder von der Fortsatzstruktur in Richtung quer, insbesondere orthogonal, zur Klappenblatt-Längsrichtung ein Biegefederträger abstehen. In diesem Fall ist der Biegefederträger die Trägerstruktur, von welchem ausgehend das Biegefederbauteil auskragt. Bevorzugt kragt das Biegefederbauteil vom Biegefederträger zum Klappenblatt hin aus, sodass die Drehachse nahe beim Klappenblatt oder sogar das Klappenblatt in Längsrichtung durchsetzend verlaufen kann. Das Biegefederbauteil kann dann, wenn ein besonders großer Abstand des Klappenblatts von der Drehachse der Luftklappe gewünscht ist, auch in Richtung vom Klappenblatt weg vom Biegefederträger abstehen. Letzteres ist insbesondere dann in Betracht zu ziehen, wenn ein unmittelbar quer vom Klappenblatt abstehendes Biegefederbauteil aufgrund seiner Länge bis zur Drehachse wenigstens abschnittsweise eine zu geringe Biegesteifigkeit aufweisen würde.

Der Biegefederträger kann zur möglichst einfachen Ausgestaltung und gleichzeitig sicheren Verbindung bei gleichzeitig hoher konstruktiver Freiheit der Anordnung des Biegefederbauteils und des Lagerzapfens und damit der Drehachse einen Bügel umfassen. Der Bügel kann einen quer zur Klappenblatt-Längsrichtung in Richtung von dem Klappenblatt weg abstehenden Ankerschenkel und einem vom Ankerschenkel quer zur Klappenblatt-Längsrichtung abstehenden Trägerschenkel aufweisen. Der Ankerschenkel dient zur Verbindung mit dem Klappenblatt oder mit der Fortsatzstruktur. Der Trägerschenkel dient bevorzugt zur Verbindung mit dem Biegefederbauteil. Das Biegefederbauteil kragt daher bevorzugt vom Trägerschenkel in Richtung zum Klappenblatt bzw. zur Fortsatzstruktur aus. Weiter bevorzugt liegt der Bügel in einer Ebene, welche sich bevorzugt quer, besonders bevorzugt orthogonal, zur Drehachse erstreckt.

Eine besonders hohe Verbindungsfestigkeit des Biegefederträgers mit der übrigen Luftklappe kann dadurch erhalten werden, dass der Biegefederträger einen U-förmigen Bügel umfasst, dessen Trägerschenkel sich zwischen zwei quer zur Klappenblatt-Längsrichtung in Richtung von dem Klappenblatt weg abstehenden Ankerschenkeln erstreckt. Bevorzugt steht jeder Ankerschenkel in Richtung quer zur Klappenblatt-Längsrichtung, bevorzugt orthogonal zur Klappenblatt-Längsrichtung, vom Klappenblatt oder von der Fortsatzstruktur ab. Auch der U-förmige Bügel ist bevorzugt eine in einer sich quer, besonders bevorzugt orthogonal, zur Drehachse der wenigstens einen Luftklappe erstreckenden Ebene liegende Struktur. Somit erfordert der Bügel keinen oder möglichst wenig Bauraum in Richtung der Drehachse und damit in Längsrichtung der wenigstens einen Luftklappe.

Eine Erstreckung einer Struktur, wie etwa eines Bauteilabschnitts, einer Ebene oder einer Achse, quer zu einer Bezugsachse bedeutet, dass die Struktur relativ zur Bezugsachse einen Winkel von wenigstens 65°, bevorzugt von wenigstens 75°, einschließt.

Als bevorzugt im Wesentlichen ebene Struktur verläuft die Erstreckungsebene des Biegefederträgers auch quer, besonders bevorzugt orthogonal, zur Klappenblatt-Längsrichtung und nimmt auch in Klappenblatt-Längsrichtung einen möglichst geringen Bauraum ein.

Bevorzugt umfasst das Biegefederbauteil aus Gründen einer möglichst einfachen Herstellbarkeit eine Blattfeder. Besonders bevorzugt ist das Biegefederbauteil eine Blattfeder.

Fertigungstechnisch besonders vorteilhaft sind der Lagerzapfen, das Biegefederbauteil und die Trägerstruktur einstückig im Spritzgussverfahren ausgebildet sind. Noch stärker bevorzugt ist auch ein Längsendabschnitt des Klappenblatts einstückig mit dem Lagerzapfen, dem Biegefederbauteil und der Trägerstruktur ausgebildet. Dann kann die gesamte Luftklappe, einschließlich Klappenblatt, Lagerzapfen, Biegefederbauteil und gegebenenfalls Fortsatzstruktur, in einem einzigen Arbeitsschritt spritzgusstechnisch hergestellt werden.

Grundsätzlich kann es zur Montage der wenigstens einen Luftklappe am Rahmen ausreichen, wenn nur an einem Längsende bzw. Längsendbereich der wenigstens einen Luftklappe ein längs der Drehachse federnd angeordneter Lagerzapfen ausgebildet ist. Dann kann, sofern auch am anderen Längsende der Luftklappe ein Lagerzapfen angeordnet ist, der andere der zwei Lagerzapfen, verglichen mit dem federnd mit der übrigen Luftklappe verbundenen einen Lagerzapfen, starr mit der übrigen Luftklappe verbunden sein.

Bevorzugt ist an beiden Längsenden der wenigstens einen Luftklappe je ein Lagerzapfen angeordnet, um die Montage der wenigstens einen Luftklappe am Rahmen zu erleichtern. Dann können optional beide Lagerzapfen gemäß der obigen Beschreibung in axialer Richtung federnd mit der übrigen Luftklappe verbunden ausgebildet sein. Die wenigstens eine Luftklappe kann zur Erleichterung ihrer Montage im Wesentlichen spiegelsymmetrisch bezüglich einer zur Drehachse orthogonalen Symmetrieebene ausgebildet sein. Die Spiegelsymmetrie kann durch einen nur an einem Längsendbereich der Luftklappe angeordneten Betätigungshebel verletzt sein.

Grundsätzlich kann die Luftklappenvorrichtung nur eine einzige Luftklappe umfassen. Zur Steuerung größerer Luftmengenströme durch die Luftdurchlassöffnung umfasst die Luftklappenvorrichtung bevorzugt eine Mehrzahl von Luftklappen. Damit diese verlustarm gemeinsam um ihre Drehachse verstellbar sind, sind die Luftklappen aus der Mehrzahl von Luftklappen bevorzugt um zueinander parallele Drehachsen drehbar am Rahmen gelagert.

Die vorliegende Anmeldung betrifft außerdem ein Kraftfahrzeug mit einer Luftklappenvorrichtung, wie sie oben beschrieben und weitergebildet ist. Bevorzugt ist die Luftklappenvorrichtung an einer Fahrzeugvorderseite angeordnet, sodass durch die Luftdurchlassöffnung eine Funktionsvorrichtung, etwa ein Betriebsmittel-Wärmetauscher, des Kraftfahrzeugs mit Luft anströmbar ist.

Die vorliegende Erfindung wird nachfolgend anhand der beiliegenden Zeichnungen näher erläutert. Es stellt dar:
- Fig. 1: eine Rückansicht einer Luftklappenvorrichtung gemäß einer Ausführungsform der vorliegenden Erfindung,
- Fig. 2: einen Längsendbereich einer Luftklappe der Luftklappenvorrichtung von Figur 1,

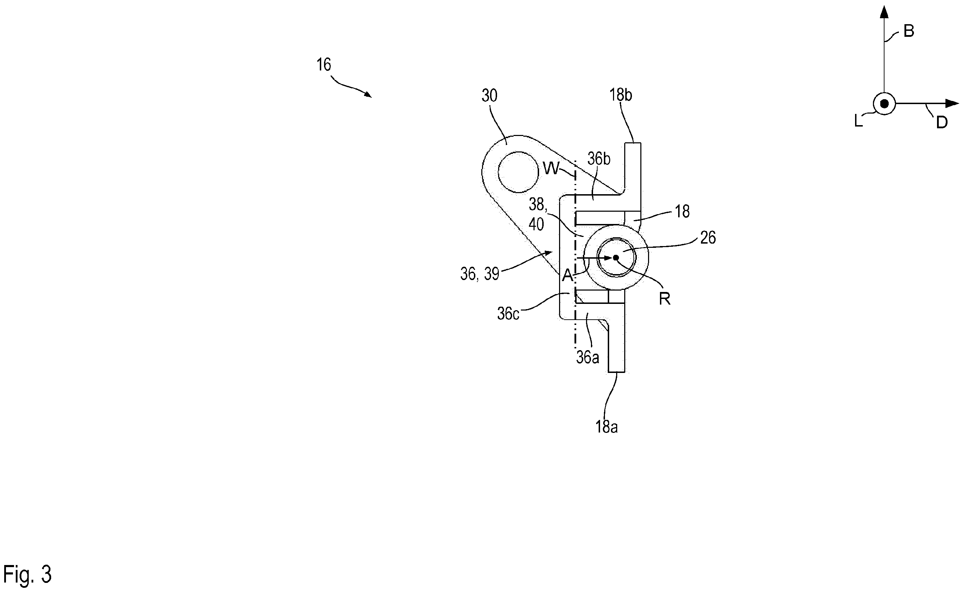

- Fig. 3: eine axiale Ansicht der Luftklappe von Figur 2 längs der Blickrichtung des Pfeils III von Figur 2,
- Fig. 4: eine Schnittansicht gemäß Schnitt A-A von Figur 1,
- Fig. 5: eine Schnittansicht gemäß Schnitt B-B von Figur 2, und
- Fig. 6: eine Ansicht einer Luftklappe der Luftklappenvorrichtung von Figur 1 von unten längs der Blickrichtung der Pfeile VI in den Figuren 1 und 2.

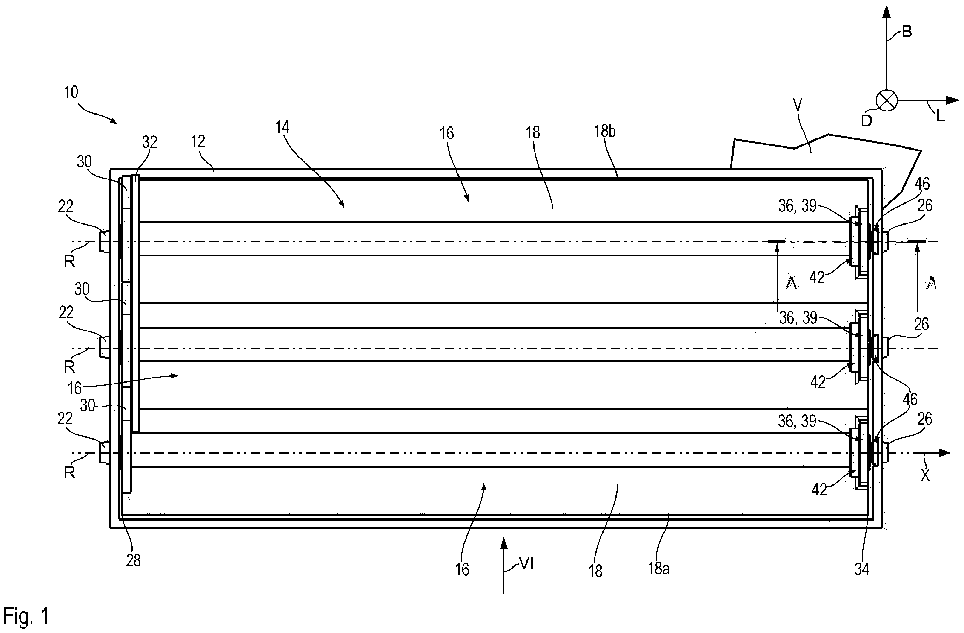

In Figur 1 ist eine Ausführungsform der vorliegenden Erfindung einer an einem Kraftfahrzeug V angeordneten Luftklappenvorrichtung allgemein mit 10 bezeichnet. Die Luftklappenvorrichtung 10 umfasst einen Rahmen 12, welcher eine Luftdurchlassöffnung 14 umgibt, die von einer Mehrzahl, im dargestellten Beispiel drei, identischen Luftklappen 16 in Längsrichtung überspannt ist.

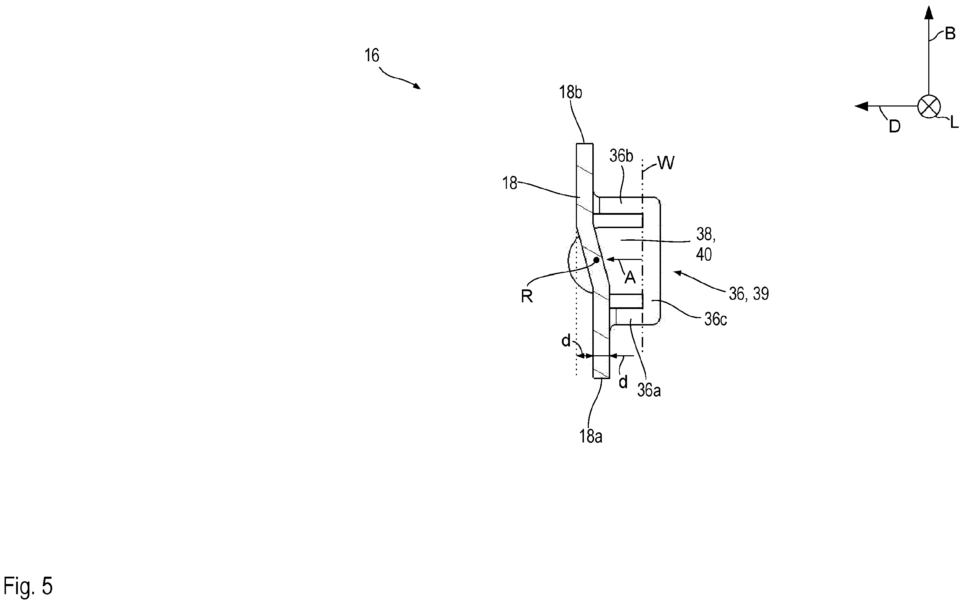

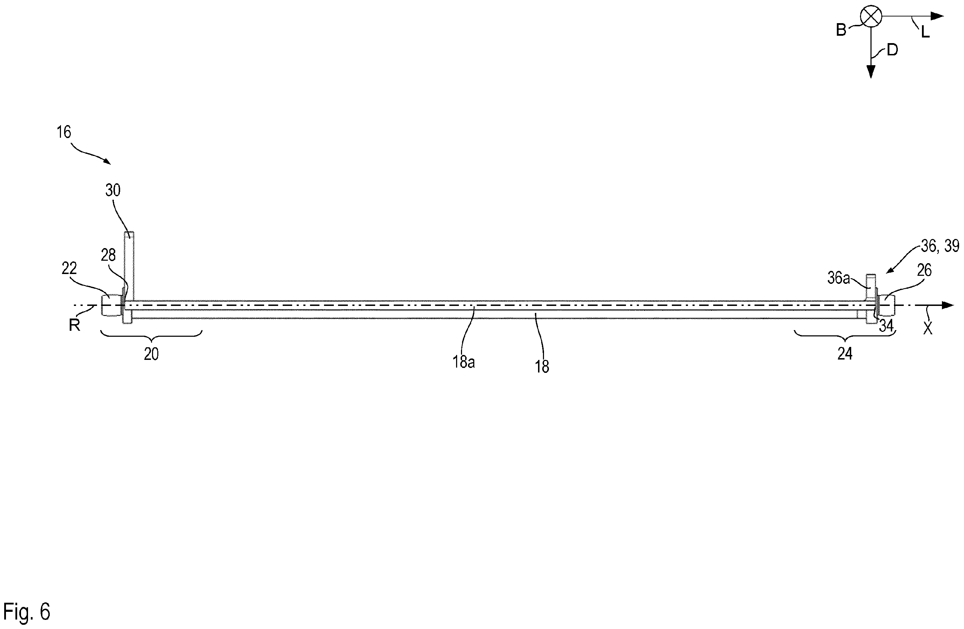

Eine Luftklappe 16 der Luftklappen 16 von Figur 1 ist stellvertretend in einer Unteransicht in Figur 6 dargestellt. Die Luftklappe 16 umfasst ein flächiges Klappenblatt 18, welches ausweislich der Schnittansicht von Figur 5 in Breitenrichtung B des Klappenblatts 18 zweifach geringfügig abgewinkelt ist. Die Abwinkelung dient dazu, den einen Rand, etwa den in Klappenblatt-Längsrichtung L verlaufenden Randabschnitt 18a um die Dicke d des Klappenblatts relativ zum anderen, in Breitenrichtung B entgegengesetzten Randabschnitt 18b zu versetzen, sodass sich in Klappenblatt-Längsrichtung L verlaufende Randabschnitte 18a und 18b unterschiedlicher benachbarter Luftklappen 16 in Klappenblatt-Dickenrichtung D der Klappenblätter 18 überlappen können, ohne hierfür die Luftklappen 16 in Klappenblatt-Dickenrichtung D versetzen zu müssen.

Die Luftklappe 16 von Figur 6 weist an ihrem in Figur 6 linken Längsendbereich 20 einen relativ zum Klappenblatt 18 starren Lagerzapfen 22 auf und weist in ihrem in Figur 6 rechten Längsendbereich 24 einen federnd angeordneten Lagerzapfen 26 auf. Die beiden Lagerzapfen 22 und 26 sind im lastfreien Zustand koaxial angeordnet und definieren eine Drehachse R der Luftklappe 16, um welche die Luftklappe 16 im Rahmen 12 schwenkbar gelagert ist und im bestimmungsgemäßen Betrieb drehen kann. Die Drehachse R definiert eine axiale Richtung X.

Da beide Lagerzapfen 22 und 26 axial neben dem Klappenblatt 18 angeordnet sind, reichen beide Längsendbereiche 20 und 24 über das jeweilige Längsende des Klappenblatts 18 axial bezogen auf die Drehachse R hinaus.

Im linken Längsendbereich 20 der Luftklappe 16, genauer an einem in Figur 6 linken Längsende 28 des Klappenblatts 18, ist ein Betätigungshebel 30 angeordnet, welcher orthogonal zur Drehachse R vom Klappenblatt 18 absteht und durch welchen die Luftklappe 16 durch einen nicht dargestellten Aktuator zur Schwenkbewegung um die Drehachse R angetrieben werden kann. Der Betätigungshebel 30 dient außerdem dazu, die drei Luftklappen 16 der Luftklappenvorrichtung 10 durch einen Kopplungssteg 32 (siehe Figur 1) zur gemeinsamen Schwenkbewegung um ihre zueinander parallelen Drehachsen R zu koppeln.

Zur axialen federnden Anordnung des Lagerzapfens 26 an der Luftklappe 16 ist im Längsendbereich 24 unmittelbar am Längsende 34 des Klappenblatts 18 ein Biegefederträger 36 im Spritzgussverfahren einstückig mit dem Klappenblatt 18 ausgebildet, welcher im dargestellten Ausführungsbeispiel orthogonal vom Klappenblatt 18 absteht.

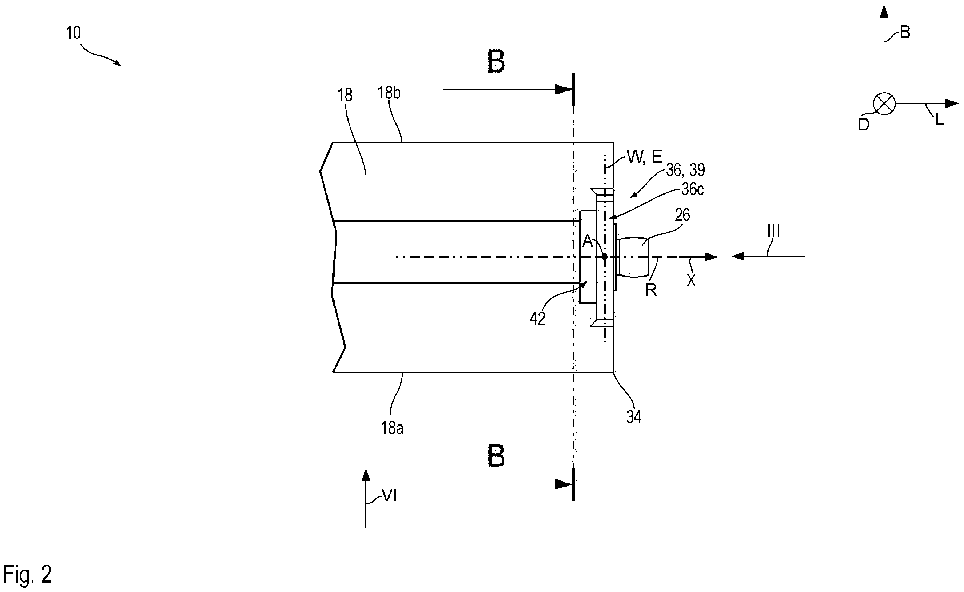

Der Biegefederträger 36 ist im dargestellten Ausführungsbeispiel U-förmig als Bügel ausgebildet und weist zwei orthogonal vom Klappenblatt 18 und damit orthogonal zur Klappenblatt-Längsrichtung L abstehende Ankerschenkel 36a und 36b auf. Im dargestellten Ausführungsbeispiel verlaufen die Ankerschenkel 36a und 36b zueinander parallel. Die Ankerschenkel 36a und 36b sind an ihren vom Klappenblatt 18 fernliegenden Längsenden durch einen Trägerschenkel 36c miteinander verbunden, welcher die Basis des U-förmigen Bügels bildet. Von dem zur Klappenblatt-Längsrichtung L im Wesentlichen orthogonal und zur Klappenblatt-Breitenrichtung B parallel verlaufenden Trägerschenkel 36c kragt ein Biegefederbauteil 38 in einer zur Klappenblatt-Längsrichtung L orthogonalen Biegefeder-Auskragrichtung A zum Klappenblatt 18 hin aus. Der Biegefederträger 36 ist im vorliegenden Ausführungsbeispiel eine Trägerstruktur 39 des Biegefederbauteils 38. Das als Blattfeder 40 ausgebildete Biegefederbauteil 38 trägt in Biegefeder-Auskragrichtung A mit Abstand vom Trägerschenkel 36c den Lagerzapfen 26, welcher in der axialen Richtung X vom Biegefederbauteil 38 absteht. Das Biegefederbauteil 38 bzw. die Blattfeder 40 ist um die zur Verlaufsrichtung des Trägerschenkels 36c parallele Biegeachse W axial auslenkbar. Hierzu ist das Klappenblatt 18 an seinem Längsende 34 im Bereich des Biegefederbauteils 38 axial ausgenommen (siehe die Ausnehmung 42 in Figur 2), um einen Bewegungsraum für das Biegefederbauteil 38 bereitzustellen.

Die beiden Ankerschenkel 36a und 36b und der sie verbindende Trägerschenkel 36c liegen in einer gemeinsamen zur Klappenblatt-Längsrichtung L orthogonalen Erstreckungsebene E.

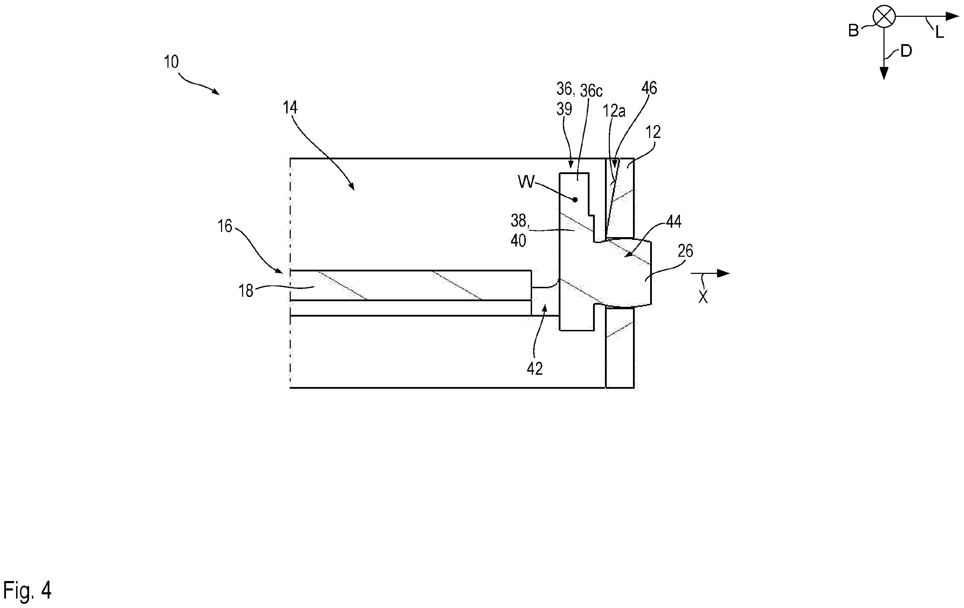

Figur 4 zeigt, wie der axial federnde Lagerzapfen 26 in einer Lagerausnehmung 44 im Rahmen 12 aufgenommen ist. Die Schnittansicht von Figur 4 zeigt ebenfalls, wie der Lagerzapfen 26 durch Auslenkung um die zur Klappenblatt-Längsrichtung L bzw. zur axialen Richtung X orthogonalen und zur Klappenblatt-Breitenrichtung B parallelen Biegeachse W in axialer Richtung zum Klappenblatt 18 hin auf der Innenseite 12a des Rahmens 12 zur Lagerausnehmung 44 hin geführt werden kann und bei Erreichen der Lagerausnehmung 44 durch Entspannung des Biegefederbauteils 38 in die Lagerausnehmung 44 hineingleitet und dort ruht. Zu Erleichterung der Montage kann die Innenseite 12a des Rahmens 12 im Bereich der Einführung des Zapfens 26 zur Lagerausnehmung 44 hin mit einer Einführschräge 46 versehen sein.

## Patentansprüche

1. Luftklappenvorrichtung (10) für ein Kraftfahrzeug (V), umfassend:
- einen Rahmen (12) mit einer Luftdurchlassöffnung (14) und
- wenigstens eine um eine Drehachse (R) drehbar am Rahmen (12) gelagerte Luftklappe (16),
wobei die wenigstens eine Luftklappe (16) verstellbar ist zwischen einer Schließstellung, in welcher die wenigstens eine Luftklappe (16) eine Öffnungsfläche der Luftdurchlassöffnung (14) stärker abdeckt, und einer Durchlassstellung, in welcher die wenigstens eine Luftklappe (16) die Öffnungsfläche der Luftdurchlassöffnung (14) weniger stark abdeckt, wobei die Drehachse (R) eine zur ihr parallele axiale Richtung (X) definiert,
wobei die wenigstens eine Luftklappe (16) an wenigstens einem ihrer axialen Längsenden (20, 24) einen in axialer Richtung (X) auskragenden Lagerzapfen (26) aufweist, welcher zur drehbaren Lagerung der wenigstens einen Luftklappe (16) in einer Lagerausnehmung (44) am Rahmen (12) um die Drehachse (R) drehbar aufgenommen ist,
**dadurch gekennzeichnet, dass** der Lagerzapfen (26) in axialer Richtung (L) federnd mit der übrigen Luftklappe (16) verbunden ist.

2. Luftklappenvorrichtung (10) nach Anspruch 1,
**dadurch gekennzeichnet, dass** die wenigstens eine Luftklappe (16) ein quer zur Drehachse (R) verlaufendes Biegefederbauteil (38) aufweist, mit welchem der Lagerzapfen (26) verbunden ist und von welchem der Lagerzapfen (26) in axialer Richtung (X) auskragt.

3. Luftklappenvorrichtung (10) nach Anspruch 2,
**dadurch gekennzeichnet, dass** die wenigstens eine Luftklappe (16) ein flächiges Klappenblatt (18) aufweist, welches sich längs der Drehachse (R) in einer Klappenblatt-Längsrichtung (L) erstreckt, welches sich quer zur Drehachse (R) in einer Klappenblatt-Breitenrichtung (B) erstreckt und welches sich sowohl quer zur Drehachse (R) als auch quer zur Klappenblatt-Breitenrichtung in einer Klappenblatt-Dickenrichtung (D) erstreckt, wobei das flächige Klappenblatt (18) in der Klappenblatt-Längsrichtung (L) eine größere Abmessung aufweist als in der Klappenblatt-Breitenrichtung (B) und in der Klappenblatt-Breitenrichtung (B) eine größere Abmessung aufweist als in der Klappenblatt-Dickenrichtung (D), wobei das Biegefederbauteil (38) in einem Längsendabschnitt (24) der wenigstens einen Luftklappe (16) angeordnet ist, wobei der Längsendabschnitt (24) das Längsende (34) des Klappenblatts (18) enthält und, ausgehend von dem jeweils anderen axialen Längsende (28) des Klappenblatts (18) in Klappenblatt-Längsrichtung (L) gemessen, von 85 % bis 120% der Klappenblattlänge reicht.

4. Luftklappenvorrichtung (10) nach Anspruch 3,
**dadurch gekennzeichnet, dass** das Biegefederbauteil (38) an seinem einen Längsendbereich von einer Trägerstruktur (39) auskragt, wobei der Lagerzapfen (26) längs einer Biegefeder-Auskragrichtung (A) mit Abstand von der Trägerstruktur (39) mit dem Biegefederbauteil (38) verbunden ist, wobei
i) das Klappenblatt (18) oder eine in Klappenblatt-Längsrichtung (L) an das Klappenblatt (18) anschließende Fortsatzstruktur die Trägerstruktur (39) ist, oder
ii) vom Klappenblatt (18) oder von der Fortsatzstruktur in Richtung quer zur Klappenblatt-Längsrichtung (L) ein Biegefederträger (36) absteht, wobei der Biegefederträger (36) die Trägerstruktur (39) ist, von welchem ausgehend das Biegefederbauteil (38) auskragt.

5. Luftklappenvorrichtung (10) nach Anspruch 4,
**dadurch gekennzeichnet, dass** der Biegefederträger (36) einen Bügel umfasst mit einem quer zur Klappenblatt-Längsrichtung (L) in Richtung von dem Klappenblatt (18) weg abstehenden Ankerschenkel (36a) und einem vom Ankerschenkel (36a) quer zur Klappenblatt-Längsrichtung (L) abstehenden Trägerschenkel (36c), wobei das Biegefederbauteil (38) vom Trägerschenkel (36c) in Richtung zum Klappenblatt (18) auskragt.

6. Luftklappenvorrichtung (10) nach Anspruch 5,
**dadurch gekennzeichnet, dass** der Biegefederträger (36) einen U-förmigen Bügel umfasst, dessen Trägerschenkel (36c) sich zwischen zwei quer zur Klappenblatt-Längsrichtung (L) in Richtung von dem Klappenblatt (18) weg abstehenden Ankerschenkeln (36a, 36b) erstreckt, wobei jeder Ankerschenkel (36a, 36b) in Richtung quer zur Klappenblatt-Längsrichtung (L) vom Klappenblatt (18) oder von der Fortsatzstruktur absteht.

7. Luftklappenvorrichtung (10) nach Anspruch 5 oder 6,
**dadurch gekennzeichnet, dass** der Biegefederträger (36) eine im Wesentlichen ebene Struktur ist, deren Erstreckungsebene (E) quer zur Klappenblatt-Längsrichtung (L) verläuft.

8. Luftklappenvorrichtung (10) nach einem der Ansprüche 2 bis 7,
**dadurch gekennzeichnet, dass** das Biegefederbauteil (38) eine Blattfeder (40) umfasst.

9. Luftklappenvorrichtung (10) nach einem der vorhergehenden Ansprüche, unter Einbeziehung des Anspruchs 4,
**dadurch gekennzeichnet, dass** der Lagerzapfen (26), das Biegefederbauteil (38) und die Trägerstruktur (39) einstückig im Spritzgussverfahren ausgebildet sind.

10. Luftklappenvorrichtung (10) nach Anspruch 9,
**dadurch gekennzeichnet, dass** auch ein Längsendabschnitt des Klappenblatts (18) einstückig mit dem Lagerzapfen (26), dem Biegefederbauteil (38) und der Trägerstruktur (39) ausgebildet ist.

11. Luftklappenvorrichtung (10) nach einem der vorhergehenden Ansprüche,
**dadurch gekennzeichnet, dass** an beiden Längsenden der Luftklappe (16) je ein Lagerzapfen (22, 26) angeordnet ist.

12. Luftklappenvorrichtung (10) nach Anspruch 11,
**dadurch gekennzeichnet, dass** der andere der zwei Lagerzapfen (22), verglichen mit dem federnd mit der übrigen Luftklappe (16) verbundenen einen Lagerzapfen (26), starr mit der übrigen Luftklappe (16) verbunden ist, oder dass beide Lagerzapfen (22, 26) gemäß einem der vorhergehenden Ansprüche in axialer Richtung (X) federnd mit der übrigen Luftklappe (16) verbunden ausgebildet sind.

13. Luftklappenvorrichtung (10) nach einem der vorhergehenden Ansprüche,
**dadurch gekennzeichnet, dass** sie eine Mehrzahl von Luftklappen (16) umfasst, welche um zueinander parallele Drehachsen (R) drehbar am Rahmen (12) gelagert sind.

14. Kraftfahrzeug (V) mit einer Luftklappenvorrichtung (10) gemäß einem der Ansprüche 1-13.
